# EUROPÄISCHE PATENTSCHRIFT

(11) **EP 3 191 348 B1**
(45) Veröffentlichungstag und Bekanntmachung des Hinweises auf die Patenterteilung: **13.02.2019**
(21) Anmeldenummer: 15763280.3
(22) Anmeldetag: 08.09.2015
(51) Int. Cl.: B60R 22/20

(54) **HÖHENVERSTELLEINRICHTUNG**
HEIGHT ADJUSTING DEVICE
DISPOSITIF D'AJUSTAGE DE HAUTEUR

(30) Priorität: 09.09.2014 DE 102014013079
(43) Veröffentlichungstag der Anmeldung: 19.07.2017
(73) Patentinhaber: Autoliv Development AB, 447 83 Vårgårda (SE)
(72) Erfinder: RUTE, Andres, 12113 Tallinn (EE); MELNIKOVA, Larissa, 12911 Tallinn (EE); MORGUNOV, Pavel, 12911 Tallinn (EE)
(74) Vertreter: Lins, Martina
(86) Internationale Anmeldenummer: PCT/EP2015/070470
(87) Internationale Veröffentlichungsnummer: WO 2016/038018

(56) Entgegenhaltungen:
- EP-A2- 0 307 784
- DE-A1- 19 626 799
- DE-A1- 19 951 293
- DE-T1- 3 790 744
- DE-U1- 29 701 481
- DE-U1-202011 001 235
- US-A- 5 911 439

## Beschreibung

Die Erfindung betrifft eine Höhenverstelleinrichtung für einen Gurtumlenker mit einer Führungsschiene, die einen C-förmigen Querschnitt mit einer Basis und zwei von der Basis in die gleiche Richtung abstehenden Seitenschenkeln aufweist, einem Schlitten, der verschieblich und festlegbar in der Führungsschiene geführt ist, und einer Rückholfeder, die an dem Schlitten befestigt und innerhalb der Führungsschiene geführt ist.

Sicherheitsgurte in Fahrzeugen dienen als passive Rückhalteelemente, die in überwiegender Anzahl als Dreipunkt-Automatikgurte ausgebildet sind. Im Bereich der Schulter ist ein Gurtumlenker angeordnet, über den das Gurtband von einem bodenseitig angeordneten Aufroller umgelenkt und zu einem neben dem Sitz angeordneten Gurtschloss geleitet wird. Das dem Gurtaufroller entfernte Ende ist auf der dem Gurtschloss gegenüberliegenden Seite des Fahrzeugsitzes festgelegt. Die Umlenkeinrichtung kann starr an einem Strukturbauteil, beispielsweise einer B-Säule, festgelegt sein. Die Festlegung erfolgt üblicherweise über eine Verschraubung. Die Verschraubung hat den Nachteil, dass die Höhe des Umlenkpunktes nicht auf die jeweilige Größe des Nutzers eingestellt werden kann. Ist der Umlenkpunkt zu hoch, kann es zu Druckstellen im Halsbereich führen, ist der Umlenkpunkt zu niedrig, ist die korrekte Führung des Gurtbandes über die Schulter nicht gegeben, so dass die Rückhaltewirkung nicht wie gewünscht erzielt werden kann.

Es sind höhenverstellbare Gurtumlenker bekannt, die in festgelegten Abständen feststellbar in einer Führungsschiene verschieblich gelagert sind. Über ein Betätigungselement wird eine Verriegelung aufgehoben, der Umlenker in der Schiene verschoben und in der gewünschten Position in der Asterung festgelegt. Zur Erleichterung der Verstellung ist dem Umlenker eine Rückholfeder zugeordnet, die üblicherweise entgegen der Gravitationsrichtung wirkt und ein Heraufschieben des Schlittens und damit des Gurtumlenkers erleichtert.

Eine Maßgabe für Höhenverstelleinrichtungen ist, dass sie möglichst unauffällig innerhalb einer Innenraumverkleidung an dem jeweiligen Strukturbauteil angeordnet werden können müssen. Dies bedingt, dass sämtliche Komponenten möglichst kleinbauend ausgebildet sind und nur ein geringer Bauraum sowohl für die Führungsschiene als auch die in der Führungsschiene angeordneten Komponenten vorhanden ist. Aufgrund der beengten Platzverhältnisse kann es zu Verkantungen der Rückholfeder innerhalb der Führungsschiene kommen, was die zuverlässige Verstellbarkeit des Gurtumlenkers beeinträchtigt.

Die US 5 911 439 A betrifft eine Einrichtung zur automatisch höhenvestellbaren Lagerung eines oberen Befestigungs- oder Umlenkbeschlages für einen Sicherheitsgurt in einem Fahrzeug mit einer im Wesentlichen vertikal angeordneten Schiene. Die Schiene weist seitliche Rastaufnahmen auf. Innerhalb der Schiene ist ein Gleitstück längsverschiebbar geführt. In dem Gleitstück ist eine Klinke mit einer seitlich vorstehenden Einrastnase zwischen einer Einraststellung und einer Ausraststellung um eine zur Schienenlängsrichtung senkrechte Achse verschwenkbar gelagert.

Die DE 20 2011 001 235 U1 betrifft einen Gurthöhenversteller für Kraftfahrzeugsicherheitsgurte, bestehend aus einer Führungsschiene und einem entlang der Führungsschiene verstellbaren, in unterschiedlichen Positionen rastbaren Schlitten, an dem eine Umlenköse für einen Sicherheitsgurt befestigbar ist. Der Schlitten ist aus einer einem ersten Schienenende angenäherten Extremlage entgegen einer Kraft einer Rückholfeder in Zwischenlagen sowie in eine Endlage nahe des zweiten Schienenendes verstellbar. An dem dem ersten Schienenende zugewandten Ende des Schlittens ist eine Rollfeder gehalten.

Die EP 0 307 784 A2 betrifft eine Sitzgurteinrichtung mit einem Führungselement, durch das sich ein Teil des Sitzgurtes erstreckt. Das Führungselement ist an einem Träger, der entlang einer Schiene bewegbar ist, angebracht, wobei der Träger eine Einrichtung zum selektiven Halten oder Arretieren des Trägers an mehreren Stellen entlang der Schiene umfasst. Eine Einrichtung ist vorgesehen, um eine Vorspannung auf den Träger gegen jede Vorspannung zu geben, die ausgehend von dem Sitzgurt darauf wirkt. Die Einrichtung umfasst ein Federband, das einen linearen Abschnitt und einen spiralförmig aufgewickelten Abschnitt aufweist.

Die DE 297 91 481 U1 betrifft einen Höhenversteller für Umlenkbeschläge von Fahrzeugsicherheitsgurten mit einer Führungsschiene, einem in der Führungsschiene verschiebbaren Verstellteil mit einer Gewindebuchse zur Aufnahme eines Umlenkbeschlages sowie einem Arretiermechanismus für das Verstellteil in Bezug auf die Führungsschiene. Die Führungsschiene weist einen im Wesentlichen C-förmigen Querschnitt auf, wobei sich an die einwärts gerichteten Schenkel jeweils nach hinten abgewinkelte Enden anschließen. Zwischen dem Verstellteil und dem unteren Ende der Führungsschiene ist eine Druckfeder vorgesehen, die in einer als Halterung oder als Magazin für die Druckfeder dienende Verschlusskappe eingesetzt ist. Die Verschlusskappe ist mit der Führungsschiene über einen Klippmechanismus verbindbar. Die DE 199 51 293 A1 betrifft eine Vorrichtung zur Höhenverstellung einer Sicherheitsgurtumlenkeinrichtung mit einer Führungsschiene, die an einer Grundfläche zwei längs verlaufende Seitenschenkel aufweist, deren Enden umgebogen sind und auf die Grundfläche zu und parallel zu den Seitenschenkel verlaufende Sperrleisten bilden, an denen in jeweiligen Höhenpositionen im Wesentlichen senkrecht zur Grundfläche verlaufende, geradlinige Sperrflächen in sägezahnförmigen Ausnehmungen vorgesehen sind. Ein Verstellteil ist in einem zwischen den Sperrleisten gebildeten Längsschlitz verschlieblich gelagert. In den Seitenschenkeln sind nach innen versetzte Sperrflächen vorgesehen, die parallel und in den jeweils gleichen Höhenpositionen wie die Sperrflächen an den Sperrleisten angeordnet sind und an denen zusätzliche Anschlagflächen des Verriegelungselementes zumindest bei Belastung in Anlage kommen.

Die DE 196 26 799 A1 betrifft eine Einrichtung zur automatisch höhenverstellbaren Lagerung eines Umlenkbeschlages für einen Sicherheitsgurt mit einer im Wesentlichen C-förmigen Schiene, die an ihren Schenkeln Rastaufnahmen aufweist, in die ein längs der Schiene verschiebbar geführten Gleitstück, in dem eine Klinke mit seitlich vorstehenden Einrastnasen gelagert ist, eingreifen kann. Eine Spiralfeder ist an einem Gehäuseoberteil, an dem die Klinke gelagert ist, gelagert. Das Gleitstück wird im Normalbetrieb mittels der Spiralfeder und eines am entgegengesetzten Ende des Gleitstücks angeordneten Bowdenzugs in Position gehalten. Erst im Falle eines Unfalls greift die Klinke infolge einer Verdrehbewegung in eine der Rastaufnahmen und sperrt so eine Bewegung des Gleitstücks.

Aufgabe der vorliegenden Erfindung ist es, eine Höhenverstelleinrichtung für einen Gurtumlenker bereitzustellen, der eine erhöhte Zuverlässigkeit hinsichtlich der Betätigbarkeit aufweist.

Erfindungsgemäß wird diese Aufgabe durch eine Höhenverstelleinrichtung mit den Merkmalen des Hauptanspruches gelöst. Vorteilhafte Ausgestaltungen und Weiterbildungen der Erfindung sind in den Unteransprüchen, der Beschreibung und den Figuren offenbart.

Die Höhenverstelleinrichtung für einen Gurtumlenker mit einer Führungsschiene, die einen C-förmigen Querschnitt an einer Basis und zwei von der Basis in die gleiche Richtung abstehenden Seitenschenkeln aufweist, einem Schlitten, der verschieblich und festlegbar an der Führungsschiene geführt ist, und einer Rückholfeder, die an dem Schlitten befestigt und innerhalb der Führungsschiene geführt ist, sieht vor, dass zumindest einer der Seitenschenkel zumindest ein Distanzelement zur Beabstandung der Rückholfeder von dem Seitenschenkel aufweist. Durch die innerhalb der Führungsschiene angeordnete Rückholfeder wird die Verschiebung des Schlittens und damit des Gurtumlenkers z.B. entgegen der Gravitationsrichtung erleichtert. Die Rückholfeder kann sich dabei jedoch an dem Seitenschenkel anlegen und dort verkanten, wodurch die Zuverlässigkeit der Rückstellbewegung oder Verstellbewegung verringert wird. Die Distanzelemente oder das Distanzelement ragt nach innen in den Aufnahmeraum in der Mitte der Führungsschiene für den Schlitten hinein und vermeidet so, dass die Rückholfeder unmittelbar an der Innenwand der Seitenschenkel anliegt und dort verkantet. Das Distanzelement ist notwendigerweise kleiner, insbesondere kürzer und/oder flacher als die Innenwand der Seitenschenkel, so dass sich eine vergleichsweise geringe Kontaktfläche zwischen der Rückholfeder und der Oberfläche des Distanzelementes ausbildet, wodurch die Neigung zum Verkeilen verringert wird. Das Distanzelement kann sich auch über die gesamte Höhe der Seitenschenkel strecken, wodurch zuverlässig an dieser Stelle jeglicher Kontakt der Rückholfeder mit der Innenseite der Seitenschenkel verhindert wird. Alternativ kann sich das Distanzelement nur über einen Teil der Höhe des Seitenschenkels erstrecken, um Material und Gewicht zu sparen und darüber hinaus die Kontaktfläche mit der Rückholfeder weiter zu verringern. Es können auch mehrere Distanzelemente übereinander, also über die Höhe der Seitenschenkel, und/oder hintereinander, also entlang der Längserstreckung der Führungsschiene verteilt angeordnet sein.

Die Führungsschiene kann zwei parallele Seitenschenkel aufweisen, die sich von der Basis weg erstrecken. Ein Dachschenkel kann sich von zumindest einem Seitenschenkel in Richtung auf den gegenüberliegenden Seitenschenkel erstrecken, sind zwei Dachschenkel vorgesehen, sind diese im Wesentlichen aufeinander zu ausgerichtet, so dass der Schlitten nicht orthogonal zu der Basis aus der Führungsschiene herausbewegt werden kann. Lediglich in Längserstreckung der Führungsschiene ist eine verschiebliche Lagerung des Schlittens in der Führungsschiene gegeben, insbesondere, wenn die Führungsschiene durch einen o- der mehrere Dachschenkel nach oben hin begrenzt ist, wobei zwischen den Enden der Dachschenkel ein Freiraum besteht, so dass der Gurtumlenker oder ein Befestigungselement für einen Gurtumlenker entlang der Führungsschiene geführt werden kann. Die Begrenzung nach oben durch den oder die Dachschenkel begrenzt auch den Raum der Rückholfeder, so dass insbesondere im Übergangsbereich von der Basis zu den Seitenschenkeln und von den Seitenschenkeln zu den Dachschenkeln aufgrund der dort vorhandenen Radien eine Verringerung der zur Verfügung stehenden Bauhöhe im Innenwandbereich der Seitenschenkel vorhanden ist, was bei einem seitlichen Anpressen der Rückholfeder an den Seitenschenkel eine zusätzliche Einklemmgefahr bedeutet. Durch die Dachschenkel wird jedoch die Führung des Schlittens verbessert.

In einer Variante der Erfindung ist die Führungsschiene einstückig ausgebildet, um Montageschritte bei der Herstellung zu vermeiden. Die Führungsschiene kann dabei aus einem Grundzuschnitt, beispielsweise aus einem Metall oder Metalllegierung, in einem Umformverfahren hergestellt werden, insbesondere durch Biegen und Pressen der jeweiligen Bereiche der Führungsschiene, nachdem Ausnehmungen ausgestanzt worden sind. Es ist auch möglich, die Führungsschiene zunächst in einem Urform verfahren herzustellen, insbesondere die Grundform mit der Basis, den Seitenschenkeln und ggf. den Dachschenkeln, um anschließend die Fertigstellung der Form durch abtragende Verfahren oder Umformverfahren vorzunehmen. Das Distanzelement kann durch Urformen an den Seitenschenkeln ausgebildet werden.

Das Distanzelement selbst kann aus dem Seitenschenkel herausgeformt sein, beispielsweise durch Eindrücken, Durchdrücken oder Einpressen, so dass sich eine nach innen gerichtete Auswölbung im Bereich der Seitenschenkel ausbildet. Alternativ zu einem einstückig ausgebildeten Distanzelement ist es möglich, dass das Distanzelement als separates Bauteil an der Innenseite der Seitenschenkel angeordnet ist oder in den Bereich zwischen den beiden Seitenschenkeln hineinragt, um so die Rückholfeder von einem Seitenschenkel beabstandet zu halten. Das separate Distanzelement kann angeklebt, angeschraubt oder angeschweißt werden, ebenfalls ist es möglich, über federnde Formschlussverbindungen, beispielsweise Clipse oder dergleichen eine Befestigung des Distanzelementes oder der Distanzelemente zu erreichen, bei der keine zusätzlichen Bauteile benötigt wird.

Eine Variante der Erfindung sieht vor, dass die Rückholfeder als eine Spiralfeder ausgebildet ist, die den Vorteil hat, dass sie innerhalb der Führungsschiene nur einen geringen Raum einnimmt und parallel zu dem Verlauf der Innenwand der Seitenschenkels innerhalb der Führungsschiene geführt werden kann. Die Spiralfeder ist bevorzugt ähnlich einer Uhrwerksfeder aufgebaut und weist eine grundsätzlich bandartige Form aus einem bevorzugt metallischen Werkstoff auf. Ein Ende ist mit den Schlitten verbunden, während das andere Ende in einer Ebene aufgerollt oder gewunden ist. Das an dem Schlitten festgelegte Ende lässt sich ausziehen, so dass sich das Federband entlang dem Seitenschenkel in der gespannten Stellung erstreckt. Die Spiralfeder kann in einer Federkassette gelagert sein, die an einem Ende der Führungsschiene angeordnet ist, ebenfalls ist es möglich, dass die Federkassette direkt mit der Führungsschiene gekoppelt ist, so dass die Federkassette zusammen mit der Führungsschiene als Modul formatiert werden kann. Das Modul aus Führungsschiene mit darin angeordnetem Schlitten und daran befestigter Rückholfeder, die in einer Federkassette geführt ist, kann vollständig vormontiert zur Endmontage bereitgestellt werden, so dass nur noch die Führungsschiene an dem Strukturbauteil festgelegt und der Gurtumlenker mit dem Gurtband an dem Schlitten fixiert werden muss. Wird der Schlitten aus einer oberen Position, in der die Rückholfeder entspannt ist, in eine untere Position verfahren, nachdem eine mechanische Sperre gelöst wurde, wird die Spiralfeder gelenkt, das mit dem Schieber verbundene Ende der Spiralfeder wird aus der Federkassette herausgezogen und die Spiralfeder gespannt, so dass bei einer umgekehrten Bewegung die Verlagerung des Schlittens durch die elastischen Rückstellkräfte der Spiralfeder erleichtert wird.

Eine Weiterbildung der Erfindung sieht vor, dass mehrere Distanzelemente über Längserstreckung der Führungsschiene an dem Seitenschenkel angeordnet sind, um über die gesamte Länge der Führungsschiene ein Verklemmen oder Verkannten der Rückholfeder im Bereich der Seitenwand zu verhindern. Die Rückholfeder ist an dem Schlitten befestigt und bevorzugt zwischen dem Schlitten und dem Seitenschenkel entlang geführt, um einerseits eine Führung für die Rückholfeder bereitzustellen und andererseits über das Distanzelement ein Verkanten zu verhindern.

Das Distanzelement ragt zumindest soweit nach innen, also in Richtung auf den Schlitten, wie eine vorhandene Krümmung beispielsweise im Übergangsbereich von der Basis zum Seitenschenkel die verfügbare Einbauhöhe für die Feder verringert. Um sicherzustellen, dass der vollständige lichte Abstand zwischen dem Dachschenkel und der Basis als Bauraum und Verlagerungsweg für die Rückholfeder zur Verfügung steht, ist vorgesehen, dass das Distanzelement zumindest bis zum Beginn des Überganges von der Basis zu dem Seitenschenkel nach innen hervorsteht, so dass keine Biegeradien oder Fertigungsradien den Bauraum verringern.

Nachfolgend werden Ausführungsbeispiele der Erfindung anhand der beigefügten Figuren näher erläutert. Es zeigen:
- Figur 1 -: eine Explosionsdarstellung eines Systems aus einer Höhenverstelleinrichtung und einer Führungsschiene;
- Figur 2 -: eine Detailansicht eines Grundkörpers; Figur 3 - eine Detailansicht der Höhenverstelleinrichtung im montierten Zustand;
- Figur 4 -: eine Querschnittsansicht einer Führungsschiene;
- Figur 5 -: Detailansichten einer Führungsschien in Drauf- und Unteransicht;
- Figur 6 -: eine Detailansicht der Höhenverstelleinrichtung in einer Anfangsposition; sowie
- Figur 7 -: eine Detailansicht der Höhenverstelleinrichtung in einer Endposition.

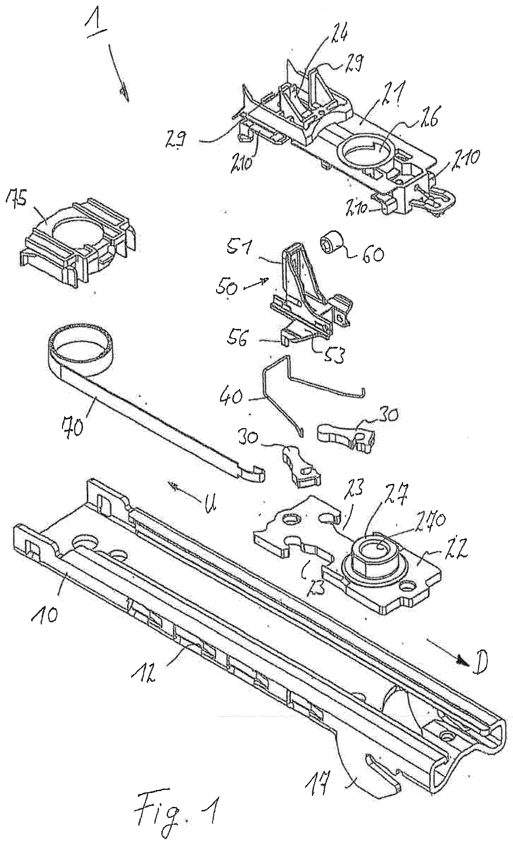

Figur 1 zeigt eine Höhenverstelleinrichtung 1 zum Einbau in ein Fahrzeug mit einer Schiene 10 und einer Rückholfeder 70, die über eine Befestigungseinrichtung 75 an der Schiene 10, die als Führungsschiene dient, festgelegt wird.

Die Höhenverstelleinrichtung 1, auch Höhenverstellschiene genannt, mit einem nicht dargestellten Gurtumlenker, durch den das Gurtband geführt und umgelenkt wird, sieht einen Schlitten 20 vor, der im dargestellten Ausführungsbeispiel aus zwei Komponenten besteht, nämlich einem Grundkörper 21 und einen Schieber 22. Der Grundkörper 21 ist als komplexes Spritzgussteil gefertigt und weist Anschläge 29 für ein Betätigungselement 50 sowie eine Ausnehmung 26 für ein Formschlusselement 27 zur Verbindung mit dem Schieber 22 auf. Es sind weitere Komponenten vorgesehen, beispielsweise Führungszapfen 210, die unterhalb einer Grundebene, die auf der Schiene 10 aufliegt, des Grundkörpers 21 liegen und sicherstellen, dass der Grundkörper 21 innerhalb der Schiene 10 geführt ist. Die Führungszapfen 210 sind im montierten Zustand unterhalb der nach innen umgebogenen Abschnitte der Führungsschiene 10 angeordnet, während die Grundebene des Grundkörpers 21 oberhalb dieser Abschnitte positioniert ist.

Der Schieber 22 ist im Wesentlichen scheibenförmig oder plattenförmig ausgebildet und weist eine im Wesentlichen rechteckige Kontur auf, die so gestaltet ist, dass der Schieber 22 innerhalb der Führungsschiene 10 verschiebbar gelagert werden kann, ohne dass er orthogonal zur Verschiebeebene aus der Führungsschiene 10 herausnehmbar ist. Über die Grundebene des Schiebers 22 steht ein Zapfen 27 als Formschlusselement hinaus, der dazu ausgebildet ist, in die Ausnehmung 26 des Grundkörpers 21 einzugreifen, um so den Schlitten 20 zu komplettieren. Innerhalb des Zapfens 27 ist eine Gewinde 270 ausgebildet, in das eine Schraube zur Befestigung des Gurtumlenkers, der als Öse oder Dreieck ausgebildet sein kann, einschraubbar ist, um die Höhenverstelleinrichtung 1 bei der Endmontage zu komplettieren. Der Schlitten 22 bewegt sich auf bzw. unterhalb der Ebene der Führungszapfen 210 und stellt sicher, dass der Schieber 22 und der Grundkörper 21 gemeinsam miteinander entlang der Längserstreckung der Führungsschiene 10 verschiebbar sind.

Innerhalb des Schiebers 22 sind zwei Ausnehmungen 23 angeordnet, in die Verriegelungselemente 30 einführbar sind. Die Ausnehmungen 23 sind auf einander gegenüberliegenden Längsseiten des Schiebers 22 angeordnet und dienen zur Aufnahme der Verriegelungselemente 30, die im Wesentlichen die gleiche Material stärke wie der Schlitten 22, mit Ausnahme des Zapfens 27, aufweist. Die Verriegelungselemente 30 sind mit einer Feder 40 gekoppelt, die im montierten Zustand dazu dienen, die Verriegelungselemente 30 nach außen zu drücken, so dass die Verriegelungselemente 30 in Richtung auf die seitlichen Außenwände der Führungsschiene 10 gedrückt werden. Dadurch wird sichergestellt, dass die Verriegelungselemente 30 in eine Verriegelungsstellung gebracht werden, wenn diese mit Formschlusselementen 12, beispielsweise in Gestalt von Ausnehmungen innerhalb der Seitenwände der Führungsschiene 10, ausgerichtet sind.

Zwischen dem Schieber 22 und dem Grundkörper 21 ist das Betätigungselement 50 gelagert, das eine Basis 53 und einen Hebel 51 aufweist, der im Wesentlichen senkrecht zu der Ebene der Basis 53 orientiert ist. Der Hebel 51 ragt im montierten Zustand über Anschläge 29 hinaus, die eine Verschiebung in Betätigungsrichtung des Betätigungselementes 50 begrenzen.

Im montierten Zustand ist der Schieber 22 in der Führungsschiene 10 eingeführt. Die Verriegelungselemente 30 sind in den Ausnehmungen 23 des Schiebers 22 angeordnet und aufgrund der runden Kopfabschnitte der Verriegelungselemente 23 und der korrespondierenden Aufnahmen innerhalb der Ausnehmung 23 verschwenkbar innerhalb der Verschiebeebene bzw. parallel zu der Grundebene des Schiebers 22 verschwenkbar gelagert. Über die Feder 40 werden die Verriegelungselemente 30 nach außen gegen die Seitenwände der Führungsschiene 10 gedrückt, so dass sie bei einer entsprechenden Ausrichtung in die Ausnehmungen 12 bzw. Formschlusselemente 12 innerhalb der Führungsschiene 10 eingreifen und eine Verlagerung in die abwärtige Verschieberichtung D sperren. Oberhalb des Schiebers 22 ist das Betätigungselement 50 aufgesetzt, das an seiner Basis 53 Eingriffsabschnitte 56 aufweist, die bei einer Verlagerung des Betätigungselementes 50 die Verriegelungselemente 30 entgegen der Federkraft durch die Feder 40 nach innen drücken, so dass sie innerhalb der Ausnehmungen 23 in dem Schieber aufgenommen sind und nicht über die maximale Breite des Schiebers 22 hinausstehen bzw. so weit hineinverlagert werden, dass sie nicht mit Formschlusselementen 12 der Führungsschiene 10 in Eingriff treten.

Der Hebel 51 durchragt eine in der Figur 1 nicht zu erkennende Ausnehmung innerhalb des Grundkörpers 21, so dass die Basis 53 zwischen der Oberseite des Schiebers 22 und der Unterseite des Grundkörpers 21 verschieblich geführt ist. Die Unterseite des Hebels 51 liegt unter Spannung an der Feder 24 an. Die Feder 24 ist zwischen den beiden Anschlägen 29, die gleichzeitig als Seitenführungen für das Betätigungselement dienen, angeordnet und an dem Grundkörper 21 an- geformt. Bei einer Ausgestaltung des Grundkörpers 21 als ein einstückiges Kunst- stoffbauteil ist die Feder 24, die als gebogene Federzunge ausgebildet ist, einstückig angeformt.

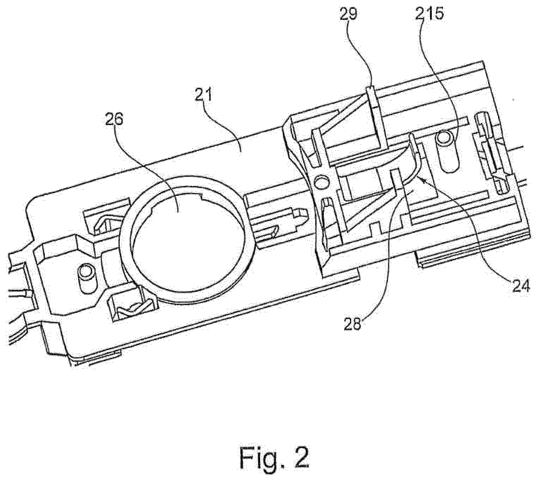

An dem oberen Ende der Führungsschiene 10, also demjenigen Ende, das entgegen der abwärtigen Verlagerungsrichtung D befindlich ist, ist eine Rückholfeder 70 angeordnet, die über ein Befestigungselement 75, das als Federkassette ausgebildet ist, an der Führungsschiene 10 befestigt ist. Die Rückholfeder 70 ist als eine Wickelfeder ausgebildet und erleichtert das Zurückziehen des Schlittens 20 in die Ausgangsstellung bzw. in eine Verlagerung entgegen der abwärtigen Verlagerungsrichtung D. An dem der Federkassette 75 entgegengesetzten Ende der Führungsschiene 10 sind Rasthaken 17 herausgebogen, über die die Führungsschiene 10 formschlüssig an einer nicht dargestellten B-Säule oder dergleichen formschlüssig festlegbar ist. Figur 2 zeigt den Grundkörper 21 in einer vergrößerten Detaildarstellung. Neben dem Grundkörper 21 und der darin ausgebildeten Ausnehmung 26 zur Aufnahme des nicht dargestellten Zapfens 27 des Schiebers 22 sind neben der einstückig angeformten Feder 24, die Ausnehmung 28 zur Durchführung des Hebels 51 und die beiden Anschläge 29 zu erkennen, über die der maximale Verlagerungsweg des Betätigungselementes 50 begrenzt wird. Die einstückig angeformte Feder 24 weist eine gebogene Form auf, so dass bei einer Verlagerung des Betätigungselementes 50 in Verlagerungsrichtung entgegen der Vorspannkraft die Feder 24 auf der Unterseite des Hebels 51 entlanggleiten kann. Die Feder 24 kann auch separat ausgebildet und an dem Grundkörper 21 befestigt sein. Die Feder 24 wird bei einer Verlagerung des Betätigungselementes nach oben gebogen. Wird die Betätigungskraft verringert oder fällt diese weg, drückt die Feder 24 das Betätigungselement 50 zurück in seine Ausgangsstellung, bis das Betätigungselement 50 gegen einen obenseitigen Anschlag 215 anliegt. Das Betätigungselement 50, präziser gesagt der Hebel 51 , wird durch die Vorspannkraft der Feder 24 zwischen der Feder 24 und dem obenseitigen Anschlag 215 eingeklemmt und dort sicher gehalten, so dass keine unerwünschten Klappergeräusche durch das Betätigungselement 50 während des Betriebes des Fahrzeuges entstehen.

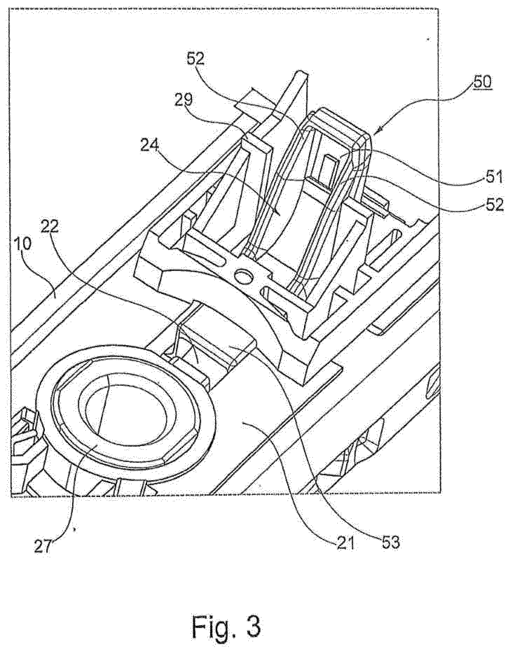

Figur 3 zeigt ein fertig montiertes System aus Führungsschiene 10 und Schlitten 20 in einer Detailansicht. Der Schieber 22 ist innerhalb der Führungsschiene 10 eingelegt und der Zapfen 27 durch ragt die Ausnehmung 26 innerhalb des Grundkörpers 21. Die Führungszapfen, die in der Figur 3 nicht zu sehen sind, sind innerhalb der Führungsschiene 10 aufgenommen, der Grundkörper 21 mit seiner Grundebene überdeckt die Führungsschiene 10, so dass sowohl der Grundkörper 21 als auch die gesamte Höhenverstelleinrichtung mit dem nicht gezeigten Umlenker innerhalb der Führungsschiene 10 sicher gehalten ist. Das Betätigungselement 50 ist durch die Ausnehmung 28 innerhalb des Grundkörpers 21 hindurch geführt, so dass der Hebel 51 über die Ebene der Führungsschiene 10 hinausragt. Der Hebel 51 weist zwei voneinander beabstandete Seitenführungseinrichtungen 52 auf, die einen Stützwinkel beiderseits der Feder 24 bilden, so dass die Feder 24 innerhalb des Betätigungselementes 50 aufgenommen ist. Die Feder 24 liegt an der Unterseite des Hebels 51 an und wird an einander gegenüberliegenden Seiten von den Seitenführungseinrichtungen 52 flankiert. Es ist zu erkennen, dass die Basis 53 des Betätigungselementes 50 zwischen dem Schieber 22 und der oberen Grundebene des Grundkörpers 21 angeordnet ist, so dass das Betätigungselement 50 zwischen dem Schieber 22 und dem Grundkörper 21 verschieblich geführt ist.

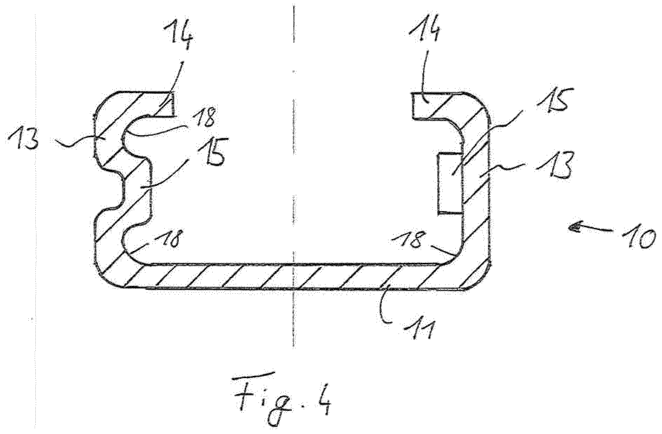

Figur 4 zeigt eine Querschnittsansicht einer Führungsschiene 10 mit einer Basis 11 und zwei von der Basis 11 nach oben abstehenden Seitenschenkeln 13, an deren der Basis 11 gegenüberliegenden Enden jeweils ein Dachschenkel 14 nach innen ragt, so dass sich ein im Wesentlichen C-förmiger Querschnitt ausbildet. Gegenüber der Basis 11 ist ein Freiraum zwischen den Dachschenkeln 14 ausgebildet, so dass beispielsweise der Zapfen 27 des Schlittens 20 durchgeführt werden kann. Die Führungsschiene 10 ist als ein einstückiges Bauteil ausgebildet, das aus einem Grundzuschnitt herausgebogen wurde. Der linke Seitenschenkel 13 weist ein Distanzelement 15 auf, das in den Innenraum der Führungsschiene 10 hineinragt. Das Distanzelement 15 ist aus dem Seitenschenkel 13 herausgeformt und steht soweit nach innen über, dass es mit den Biegeradien 18 von dem Übergang der Basis 11 zu den Seitenschenkeln 13 abschließt oder darüber hinaus nach innen hineinragt, so dass gewährleistet ist, dass der gesamte lichte Abstand zwischen dem Dachschenkel 14 und der Basis 11 zur Verfügung steht, wenn die Rückholfeder 70 an der Innenseite der Seitenschenkel 13 entlang geführt wird. Eine vollständige Anlage der nicht dargestellten Rückholfeder 70 an der Seitenwand ist somit nicht möglich und ein Verklemmen der bandförmigen Rückholfeder 70 in den Biegeradien 18, die den Bauraum zwischen dem Dachschenkel 14 und der Basis 11 verringern, wird vermieden.

An der Innenseite des rechten Seitenschenkels 13 ist eine Variante der Erfindung dargestellt, bei der das Distanzelement 15 als separates Bauteil ausgebildet und innerhalb der Führungsschiene 10 an dem Seitenschenkel 13 befestigt ist, beispielsweise angeschraubt, angeklebt, angeschweißt oder eingeklemmt, beispielsweise über Formschlusselemente und Federclipse. Anders als am linken Seitenschenkel 15, bei der das Distanzelement 15 aus dem Seitenschenkel durch ein Umformverfahren, beispielsweise Drücken oder Pressen herausgeformt und als Sicke ausgebildet ist, ist das rechte Distanzelement 15 als separates Bauteil ausgebildet, das auch aus einem Werkstoff hergestellt sein kann, das von dem Werkstoff der Führungsschiene 10 verschieden ist. Dadurch können die unterschiedlichen Anforderungen an die mechanische Stabilität der Führungsschiene 10 und dem Distanzelement 15 berücksichtigt und das Distanzelement 15 leichter ausgebildet werden. Sofern das Distanzelement 15 als separates Bauteil ausgebildet ist, kann dieses auch aus einem Kunststoff hergestellt sein, wodurch einerseits Gewicht eingespart und andererseits verbesserte Gleiteigenschaften der Rückholfeder 70 an der Oberfläche des Distanzelementes 15 erreicht werden können. Durch die Dachschenkel 14 wird verhindert, dass der Schlitten 20 in Richtung von der Basis 11 weg aus der Führungsschiene 10 herausbewegt werden kann.

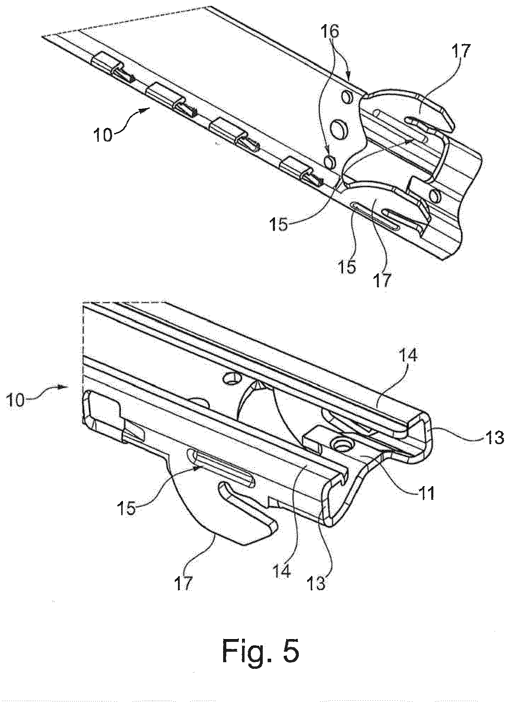

In der Figur 5 sind zwei Detailansichten einer Führungsschiene 10 in Draufsicht und Untenansicht gezeigt, wobei die untere Darstellung die perspektivische Draufsicht und die obere Darstellung die perspektivische Untenansicht zeigt. Die Führungsschienen 10 sind auch hier einstückig ausgebildet und aus einem Grundzuschnitt ausgeformt, nämlich herausgebogen. Aus den Seitenschenkeln 13 sind nach innen gerichtete Sicken als Distanzelemente 15 herausgeformt, nämlich hinein gedrückt, so dass eine Rückholfeder von der Innenseite der Seitenschenkel 13 beabstandet gehalten wird. In einem Endbereich der Führungsschiene 10 sind die herausgebogenen Rasthaken 1 7 zu erkennen, die ebenfalls einstückig aus der Führungsschiene 10 herausgeformt wurden. Die Rasthaken 17 sind an einander gegenüberliegenden Seiten der Basis 1 1 ausgebildet und stehen von dieser in einer den Seitenschenkeln 13 entgegengesetzten Orientierung von der Basis 1 1 ab. Im Bereich der Rasthaken 17 sind die Sicken und Distanzelemente 15 in die Seitenschenkel 13 eingeprägt oder ausgeformt und dienen neben der Ausgestaltung als Distanzelement 15 auch zur Erhöhung der mechanischen Stabilität der Führungsschiene 10 im Bereich der Rasthaken 17.

In der oberen Darstellung der Figur 5 ist zu erkennen, dass in dem Ausformbereich in der Basis 1 1 Entlastungsbohrungen 16 vorgesehen sind, die überraschend die Haltbarkeit der Führungsschiene 10 erhöhen, da sie ein Ausreißen der Blechhaken 17 verhindern und eine plastische Verformung der Führungsschiene 10 in diesem Bereich ermöglichen.

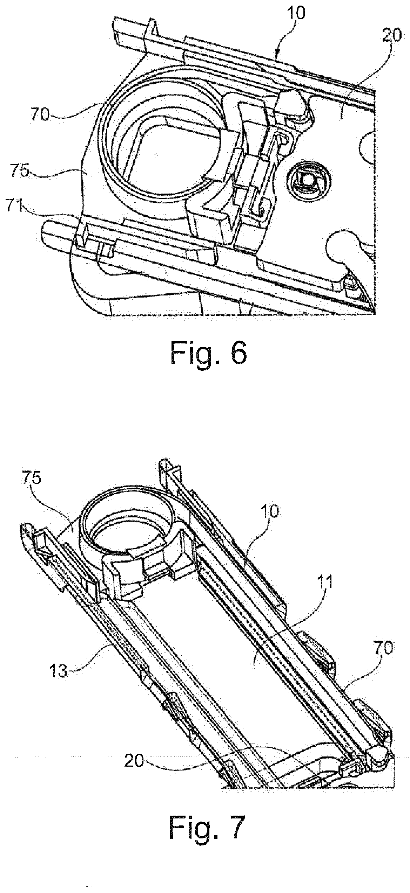

Figur 6 zeigt eine perspektivische Detailansicht einer Höhenverstelleinrichtung in einem montierten Zustand in einer Anfangsposition. Die Führungsschiene 10 ist mit dem Schlitten 20 bestückt, an dem ein nicht dargestellter Gurtumlenker, beispielsweise an dem Zapfen 27, befestigt werden kann. An dem oberen Ende des Schlittens 20 ist die Federkassette 75 angeordnet, in der die spiralförmig ausgebildete Rückholfeder 70 gelagert ist. Die Federkassette 75 ist über Federlaschen 71 , die einstückig an der Federkassette 75 ausgebildet ist, an korrespondierenden Ausnehmungen innerhalb der Führungsschiene 10 formschlüssig festgelegt, so dass die Führungsschiene 10 zusammen mit dem Schlitten 20 und der Federkassette 75 als vorfertigbares Modul bereitgestellt ist. Die Rückholfeder 70 ist in einer Ebene aufgewickelt und ermöglicht es, dass das an dem Schlitten 20 befestigte Ende aus der Federkassette 75 herausgezogen werden kann und durch das Herausziehen die Rückholfeder 70 spannt. In der Figur 6 ist die Rückholfeder 70 entspannt, das heißt, dass der Schlitten 20 sich in der Ausgangsposition befindet, üblicherweise in der maximal höchsten Rastposition. Figur 7 zeigt die Höhenverstellvorrichtung gemäß Figur 6 in der Endposition, in der der Schlitten 20 maximal nach unten innerhalb der Führungsschiene 10 geführt ist. Es ist zu erkennen, dass die Rückholfeder 70 als Federband ausgebildet und innerhalb der C-förmigen Führungsschiene 10 geführt ist. Das an dem Schlitten 20 geführte Ende ist zwischen der Außenseite des Schlittens 20 und der Innenseite des Seitenschenkels 13 geführt. Die beabstandet zueinander angeordneten und sich über die Längserstreckung der Führungsschiene verteilt befindlichen Distanzelemente 15, die in der Figur 7 durch die ausgezogene Feder 70 verdeckt sind, beabstanden die Rückholfeder 70 dergestalt von den Innenseiten der Seitenschenkel 13, dass ein Kontakt der Rückholfeder 70 im Bereich der Krümmungsradien 18 der Führungsschiene 10 vermieden wird.

## Patentansprüche

1. Höhenverstelleinrichtung für einen Gurtumlenker mit einer Führungsschiene (10), die einen C-förmigen Querschnitt mit einer Basis (11) und zwei von der Basis (11) in die gleiche Richtung abstehenden Seitenschenkeln (13) aufweist, einem Schlitten (20), der verschieblich und festlegbar in der Führungsschiene (10) geführt ist, und einer Rückholfeder (70), die an dem Schlitten (20) befestigt und innerhalb der Führungsschiene (10) geführt ist, **dadurch gekennzeichnet, dass** zumindest einer der Seitenschenkel (13) zumindest ein Distanzelement (15) zur Beabstandung der Rückholfeder (70) von dem Seitenschenkel (13) aufweist.

2. Höhenverstellvorrichtung nach Anspruch 1, **dadurch gekennzeichnet, dass** die Führungsschiene (10) zwei parallele Seitenschenkel (13) und zumindest einen von dem Seitenschenkel (13) in Richtung auf den gegenüber liegenden Seitenschenkel (13) orientierten Dachschenkel (14) aufweist.

3. Höhenverstellvorrichtung nach Anspruch 1 oder 2, **dadurch gekennzeichnet, dass** die Führungsschiene (10) einstückig ausgebildet ist.

4. Höhenverstellvorrichtung nach einem der voranstehenden Ansprüche, **dadurch gekennzeichnet, dass** die Führungsschiene (10) aus einem Grundzuschnitt in einem Umformverfahren hergestellt ist.

5. Höhenverstellvorrichtung nach einem der voranstehenden Ansprüche, **dadurch gekennzeichnet, dass** das Distanzelement (15) aus dem Seitenschenkel (13) herausgeformt ist.

6. Höhenverstellvorrichtung nach einem der voranstehenden Ansprüche, **dadurch gekennzeichnet, dass** die Rückholfeder (70) zwischen dem Schlitten (20) und dem Seitenschenkel (13) entlanggeführt ist.

7. Höhenverstellvorrichtung nach einem der voranstehenden Ansprüche, **dadurch gekennzeichnet, dass** die Rückholfeder (70) als eine Spiralfeder ausgebildet ist.

8. Höhenverstellvorrichtung nach Anspruch 7, **dadurch gekennzeichnet, dass** die Spiralfeder (70) in einer Federkassette (75) gelagert ist, die an einem Ende der Führungsschiene (10) angeordnet ist.

9. Höhenverstellvorrichtung nach einem der voranstehenden Ansprüche, **dadurch gekennzeichnet, dass** mehrere Distanzelemente (15) über die Längserstreckung der Führungsschiene (10) an dem Seitenschenkel (13) angeordnet sind.

10. Höhenverstellvorrichtung nach einem der voranstehenden Ansprüche, **dadurch gekennzeichnet, dass** das Distanzelement (15) zumindest bis zum Beginn des Überganges von der Basis (11) zu dem Seitenschenkel (13) nach innen hervorsteht.

## Claims

1. Height adjusting device for a belt deflector with a guide rail (10) which has a C-shaped cross section with a base (11) and two side shanks (13) which project from the base (11) in the same direction, with a carriage (20) which can be shifted and fixed on the guide rail (10), and with a return spring (70) which is fastened on the carriage (20) and is guided inside the guide rail (10), **characterized by that** at least one of the side shanks (13) has at least one spacing element (15) for spacing the return spring (70) from the side shank (13).

2. Height adjusting device according to Claim 1, **characterized by that** the guide rail (10) has two parallel side shanks (13) and at least one top shank (14) oriented from the side shank (13) in the direction of the oppositely located side shank (13).

3. Height adjusting device according to Claim 1 or 2, **characterized by that** the guide rail (10) is formed in one part.

4. Height adjusting device according to one of the previous claims, **characterized by that** the guide rail (10) is produced from a base blank in a forming method.

5. Height adjusting device according to one of the previous claims, **characterized by that** the spacer element (15) is formed from the side shank (13).

6. Height adjusting device according to one of the previous claims, **characterized by that** the return spring (70) is run between and along the carriage (20) and the side shank (13).

7. Height adjusting device according to one of the previous claims, **characterized by that** the return spring (70) is designed as a helical spring.

8. Height adjusting device according claim 7, **characterized by that** the helical spring (70) is supported in a spring cartridge (75) arranged on an end of the guide rail (10).

9. Height adjusting device according to one of the previous claims, **characterized by that** several spacer elements (15) are arranged over the longitudinal extension of the guide rail (10) on the side shank (13).

10. Height adjusting device according to one of the previous claims, **characterized by that** the spacer element (15) projects inward at least up to the start of the transition from the base (11) to the side shank (1).

## Revendications

1. Dispositif d'ajustage de hauteur destiné à un élément de renvoi de ceinture comprenant un rail de guidage (10), qui présente une section transversale en forme de C avec une base (11) et deux parties latérales (13) s'élevant de la base (11) dans la même direction, un glissoir (20), qui est guidé de manière coulissante et fixable dans le rail de guidage (10), et un ressort de rappel (70), qui est fixé au glissoir (20) et guidé à l'intérieur du rail de guidage (10), **caractérisé en ce qu'**au moins une des parties latérales (13) comporte au moins un élément d'écartement (15) pour maintenir le ressort de rappel (70) à distance de la partie latérale (13).

2. Dispositif d'ajustage de hauteur selon la revendication 1, **caractérisé en ce que** le rail de guidage (10) comporte deux parties latérales (13) parallèles et au moins une partie supérieure (14) orientée depuis la partie latérale (13) en direction de la partie latérale (13) opposée.

3. Dispositif d'ajustage de hauteur selon la revendication 1 ou 2, **caractérisé en ce que** le rail de guidage (10) est réalisé en une seule pièce.

4. Dispositif d'ajustage de hauteur selon l'une des revendications précédentes, **caractérisé en ce que** le rail de guidage (10) est fabriqué à partir d'une découpe de base par un procédé de formage.

5. Dispositif d'ajustage de hauteur selon l'une des revendications précédentes, **caractérisé en ce que** l'élément d'écartement (15) est formé à partir de la partie latérale (13).

6. Dispositif d'ajustage de hauteur selon l'une des revendications précédentes, **caractérisé en ce que** le ressort de rappel (70) est guidé entre le glissoir (20) et la partie latérale (13).

7. Dispositif d'ajustage de hauteur selon l'une des revendications précédentes, **caractérisé en ce que** le ressort de rappel (70) est réalisé sous la forme d'un ressort en spirale.

8. Dispositif d'ajustage de hauteur selon la revendication 7, **caractérisé en ce que** le ressort en spirale (70) est logé dans une cassette à ressort (75), qui est disposée à une extrémité du rail de guidage (10).

9. Dispositif d'ajustage de hauteur selon l'une des revendications précédentes, **caractérisé en ce que** plusieurs éléments d'écartement (15) sont disposés sur la partie latérale (13) sur la longueur du rail de guidage (10).

10. Dispositif d'ajustage de hauteur selon l'une des revendications précédentes, **caractérisé en ce que** l'élément d'écartement (15) dépasse vers l'intérieur au moins jusqu'au début de la transition de la base (11) à la partie latérale (13).
